# EUROPÄISCHE PATENTANMELDUNG

(11) **EP 0 834 706 A1**
(43) Veröffentlichungstag der Anmeldung: **08.04.1998**
(21) Anmeldenummer: 97117014.7
(22) Anmeldetag: 01.10.1997
(51) Int. Cl.: F24F 3/16, B01D 46/42

(54) **Rasterdecke für Reinraum**

(30) Priorität: 05.10.1996 DE 19641127
(71) Anmelder: Meissner & Wurst GmbH & Co. Lufttechnische Anlagen Gebäude- und Verfahrenstechnik, D-70499 Stuttgart (DE)
(72) Erfinder: Feller, eugen, 71120 Grafenau (DE); Renz, Manfred, Dr., 71254 Ditzingen (DE)
(74) Vertreter: Kohl, Karl-Heinz

(57) **Zusammenfassung**

Die Reinraumdecke weist in einer Deckentragvorrichtung angeordnete Filter-Einheiten (3, 4) auf, die mit Filterelementen (3) und Tragrahmen (4) versehen sind. Die Tragrahmen (4) sind an Haltern (8) abgestützt und über Fluidrinnen (70, 71) gegenüber der Deckentragvorrichtung abgedichtet. Die Fluidrinnen (70, 71) sind filterelementseitig vorgesehen und können darum in der Einbaulage der Filterelemente (3, 4) in der Deckentragkonstruktion innerhalb von dessen Umriß liegen. Dadurch wird eine Verbreiterung der Deckentragkonstruktion vermieden. Die wirksame Filterfläche kann infolge der geringen Breite der Deckentragkonstruktion vergrößert werden. Die Deckenunterseite kann zudem eben ausgebildet sein.

## Beschreibung

Die Erfindung betrifft eine Reinraumdecke, vorzugsweise eine Rasterdecke, nach dem Oberbegriff des Anspruches 1.

Bei bekannten Rasterdecken dieser Art weist die Deckenkonstruktion Schienen und diese verbindende Knotenpunkte bzw. Kupplungsstücke auf. An den Schienen sind die Filter-Ventilator-Einheiten befestigt. Zur Abdichtung der Filterelemente gegenüber der Deckentragkonstruktion weisen die Schienen Fluidrinnen auf, in die ein Dichtsteg des Filterelementtragrahmens zur Abdichtung ragt. Diese Ausbildung hat den Nachteil, daß die Profilbreite der Schienen relativ groß ist, was wiederum zur Folge hat, daß die wirksame Filterfläche verkleinert wird. Ferner können durch die größere Profilbreite stärkere Turbulenzen im Reinraum auftreten. Um die Turbulenzen örtlich zu verringern, ist deshalb vorgesehen, ein Lochblech unterhalb der Filter deckenbündig vorzusehen. Eine für die Rasterdecke vorgesehene Beleuchtung wird ebenfalls bei den bekannten Rasterdecken in das Schienenprofil integriert. Dadurch wird ebenfalls die Profilbreite vergrößert und damit die wirksame Filterfläche verringert.

Es sind auch Rasterdecken bekannt, bei denen die Beleuchtung reinraumseitig an der Deckentragkonstruktion befestigt, insbesondere abgehängt, ist. Dadurch ist die Reinraumhöhe verringert.

Der Erfindung liegt die Aufgabe zugrunde, eine Reinraumdecke der eingangs genannten Art so auszubilden, daß eine Verbreiterung der Deckentragkonstruktion durch die Fluidrinne und eine etwa vorgesehene Beleuchtung vermieden werden.

Diese Aufgabe wird bei einer Reinraumdecke der gattungsbildenden Art erfindungsgemäß mit den kennzeichnenden Merkmalen des Anspruches 1 gelöst.

Infolge der erfindungsgemäßen Ausbildung sind die Fluidrinnen filterelementseitig vorgesehen. Sie können darum in der Einbaulage der Filterelemente in der Deckentragkonstruktion innerhalb von dessen Umriß liegen. Dadurch wird eine Verbreiterung der Deckentragkonstruktion vermieden. Die wirksame Filterfläche kann infolge der relativ geringen Breite der Deckentragkonstruktion sogar vergrößert werden. Ferner ist es infolge der erfindungsgemäßen Ausbildung möglich, die Deckenunterseite eben auszubilden. Wenn an der erfindungsgemäßen Reinraumdecke beispielsweise eine Beleuchtung, eine Anhängelast, eine Wandfixierung oder dergleichen befestigt werden soll, können diese zwischen einander benachbarten Filtern liegen.

Weitere Merkmale der Erfindung ergeben sich aus den weiteren Ansprüchen, der Beschreibung und den Zeichnungen.

Die Erfindung wird nachstehend anhand mehrerer in den Zeichnungen dargestellter Ausführungsbeispiele näher beschrieben. Es zeigen
- Fig. 1: im Vertikalschnitt einen Teil einer erfindungsgemäßen Reinraumdecke mit einer Abdeckung,
- Fig. 2: im Vertikalschnitt die Reinraumdecke nach Fig. 1 mit einer Vertikalwand,
- Fig. 3: in einer Darstellung entsprechend Fig. 1 die Reinraumdecke gemäß Fig. 1 mit einer Leuchte,
- Fig. 4: in einer Darstellung entsprechend Fig. 1 die Reinraumdecke gemäß Fig. 1 mit einem Blindfilter und einem Blindblech,
- Fig. 5: im Vertikalschnitt die Reinraumdecke nach Fig. 1 mit daran befestigter Anhängelast,
- Fig. 6: ein als T-Knotenpunkt dienendes Kupplungsstück einer Tragvorrichtung der Reinraumdecke nach Fig. 1 in vergrößerter und perspektivischer Darstellung,
- Fig. 7: das Kupplungsstück nach Fig. 6 in Unteransicht,
- Fig. 8: das Kupplungsstück nach Fig. 6 in Draufsicht,
- Fig. 9: das Kupplungsstück in einem Schnitt längs der Linie IX-IX in Fig. 6,
- Fig. 10: das Kupplungsstück nach Fig. 6 in Ansicht gemäß Pfeil X in Fig. 6,
- Fig. 11: ein als Kreuzknotenpunkt ausgebildetes Kupplungsstück in einer Darstellung entsprechend Fig. 9,
- Fig. 12 und Fig. 13: in Darstellungen entsprechend Fig. 1 zwei weitere Ausführungsformen von erfindungsgemäßen Reinraumdecken.

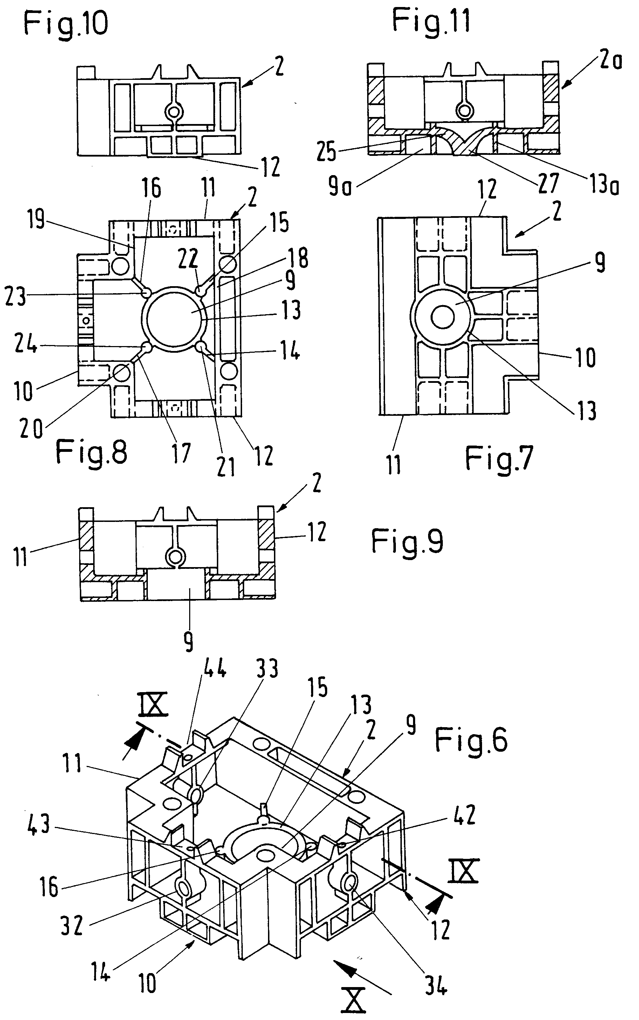

In der Mikroelektronik, Pharmaindustrie, Mikrotechnik/Optik, Lebensmittelproduktion, Medizintechnik und Labortechnik und dergleichen muß in den sogenannten Reinräumen die Luft keim- und/oder staubfrei gehalten werden. Hierzu werden in diesen Räumen Reinraumdecken vorgesehen, bei denen zur Reinigung der Luft Filter-Einheiten an einer an der Decke abgehängten Tragvorrichtung befestigt werden. Die Tragvorrichtung kann eine Rasterdecke sein und Tragschienen 1 sowie Kupplungsstücke 2, 2a (Fig. 6 bis 11) aufweisen, die die Schienen 1 an Knotenpunkten miteinander verbinden. Die Schienen 1 und die Kupplungsstücke 2, 2a sind Profilteile. Die Schienen 1 sind vorzugsweise gleich ausgebildet, während die Kupplungsstücke 2, 2a in bekannter Weise Kreuzform, T-Form und L-Form haben und mit Ansätzen versehen sind, auf denen die Schienen 1 mit ihren Enden aufgeschoben oder an welche die Schienen 1 stoßend angeschlossen werden können. Die Ansätze haben im wesentlichen denselben Querschnitt wie die Schienen 1. Anhand der Fig. 6 bis 11 werden beispielhaft ein T-förmiges Kupplungsstück 2 und ein kreuzförmiges Kupplungsstück 2a näher beschrieben werden.

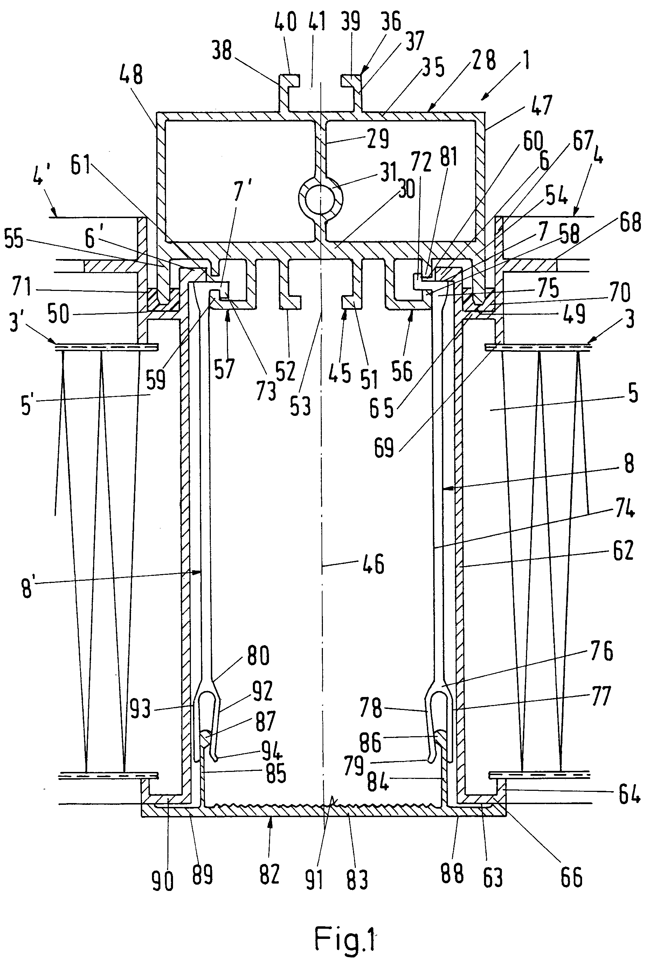

An den Schienen 1 sind, wie die Fig. 1 bis 5 zeigen, die Filter-Einheiten befestigt. In den Fig. 1 bis 5 ist lediglich ein Teil der Filter 3, 3' mit zugehörigen Filterträgern 4, 4' dargestellt. Die Filter 3, 3' ragen in seitliche Aufnahmen 5, 5' der Träger 4, 4'. Sie sind Profilschienen, die mit einem oberen Schenkel 6, 6' auf einer Schulter 7, 7' eines mit der Schiene 1 verbundenen Halters 8, 8' abgestützt sind. An beide Schienenlängsseiten schließt jeweils eines der Filter 3, 3' mit dem zugehörigen Träger 4, 4' an. Die Anordnung der Schienen 1 und der Kupplungsstücke 2, 2a sowie der daran befestigten Filter-Ventilator-Einheiten ist an sich bekannt.

Das Kupplungsstück 2 (Fig. 6 bis 10) weist eine bodenseitige Durchführöffnung 9 auf, die insbesondere zur Durchführung von Kabeln oder zum Einbau von sogenannten Sprinklern genutzt werden können. Wie insbesondere die Fig. 7 und 8 zeigen, ist die Durchführöffnung 9 mittig am Kupplungsstück 2 vorgesehen. Es ist zum Anschluß von drei Schienen 1 vorgesehen, die an die seitlichen Ansätze 10 bis 12 angeschlossen werden. Hierzu sind die Ansätze mit einem dem Schienenprofil entsprechenden Profil ausgebildet. Die Durchführöffnung 9 ist von einer umlaufenden Ringwand 13 begrenzt, von der im Ausführungsbeispiel vier radial nach außen verlaufende Versteifungsrippen 14 bis 17 bis zu gegenüberliegenden Wandabschnitten 18 bis 20 verlaufen. Im Anschlußbereich an die Ringwand 13 weisen die Versteifungsrippen 14 bis 17 verdickte Anschlußabschnitte 21 bis 24 auf, die vorzugsweise kreisförmigen Querschnitt haben.

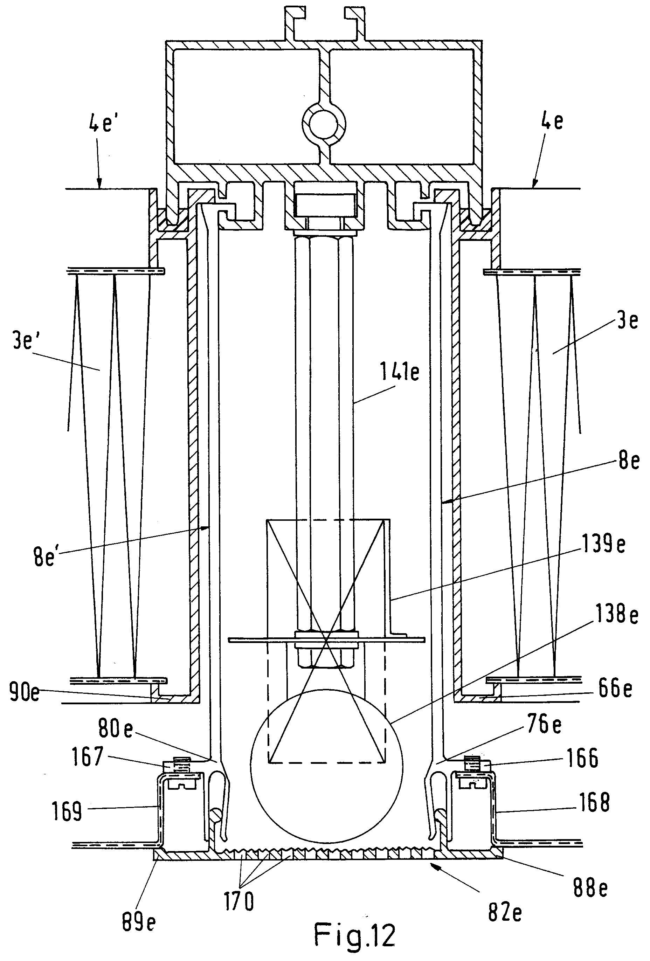

Wie Fig. 11 für das kreuzförmige Kupplungsstück 2a zeigt, kann die Durchführöffnung 9a durch einen Boden geschlossen sein. Er hat im Querschnitt teilkreisförmig nach unten gekrümmte und V-förmig zueinander verlaufende Bodenflächen 25, 26, die in einem gemeinsamen, mittig zur Durchführöffnung 9a liegenden Ende 27 enden. Die Dicke der Bodenflächen 25, 26 nimmt vom Endstück 27 aus stetig ab, so daß sie am Übergang zur Ringwand 13a die geringste Dicke haben. Dadurch kann der Boden bei Bedarf einfach herausgebrochen werden. Solche Böden können bei den anderen Kupplungsstücken ebenfalls vorgesehen sein.

Die Schiene 1 hat einen rechteckförmigen Hohlkörper 28. In halber Breite weist der Hohlkörper einen über die ganze Länge des Schienenprofiles 1 verlaufenden Mittelsteg 29 auf, der in seiner unteren Hälfte mit Abstand vom Boden 30 des Hohlkörpers 28 einen rohrartigen Abschnitt 31 aufweist, der in montierter Lage der Deckentragkonstruktion mit entsprechenden Rohrkörpern 32 bis 34 des Kupplungsstückes 2 fluchtet (Fig. 6) und zur Aufnahme eines beispielsweise stabförmigen Sicherungsteiles dient. Der Rohrabschnitt 31 ist einteilig mit dem Steg 29 ausgebildet. Auf der oberen Wand 35 des Hohlkörpers 28 ist eine symmetrisch zum Steg 29 liegende Aufnahme 36 vorgesehen, die von zwei einteilig mit der Wand 35 ausgebildeten L-förmigen Stegen 37 und 38 begrenzt ist.

Die einander zugewandten abgewinkelten Schenkel 39 und 40 der Stege 37, 38 begrenzen einen Durchführschlitz 41, der in montierter Lage mit entsprechenden Aufnahmen 42 bis 44 des Kupplungsstückes 2 fluchtet, je nach Anschlußlage der Schiene 1 an das Kupplungsstück.

Unterhalb des Bodens 30 der Schiene 1 ist eine weitere Aufnahme 45 vorgesehen, die gleich ausgebildet ist wie die Aufnahme 36. Die Aufnahmen 36, 45 sind spiegelsymmetrisch zur Längsmittelebene 46 der Schiene 1 angeordnet. Die Längsseitenwände 47, 48 der Schiene 1 sind über den Boden 30 nach unten so weit verlängert, daß ihre freien Ränder 49, 50 in gleicher Höhe liegen wie die einander zugewandten Schenkel 51, 52 der Aufnahme 45. Diese Schenkel 51, 52 begrenzen wiederum einen Durchführschlitz 53. Zwischen den verlängerten Abschnitten 54, 55 der Seitenwände 47, 48 und der Aufnahme 45 ist jeweils mit Abstand von ihnen eine weitere Aufnahme 56, 57 vorgesehen. Beide Aufnahmen sind gleich ausgebildet und spiegelsymmetrisch zur Längsmittelebene 46 der Schiene 1 angeordnet. Sie haben jeweils rechteckigen Umriß und weisen an ihren den verlängerten Wandabschnitten 54, 55 zugewandten Seitenwänden 58, 59 einen Durchführschlitz 60, 61 auf, in die die Halter 8, 8' der Deckenkonstruktion mit ihren Schultern 7, 7' ragen. Die Aufnahmen 56, 57 haben gleiche Höhe wie die zwischen ihnen liegende Aufnahme 45, so daß sie nicht über diese und die Wände 47, 48 ragen.

Die Filter 3 und 3' sind in den rahmenartig ausgebildeten Filterträgern 4, 4' gehalten. Die Filterträger sind gleich ausgebildet, so daß nachfolgend lediglich der Filterhalter bzw. -träger 4 näher beschrieben wird.

Der Filterhalter 4 ist als rechteckiger Rahmen mit dem in Fig. 1 dargestellten Querschnitt ausgebildet. Dieser weist eine ebene Wand 62 auf, deren unterer Rand 63 L-förmig in Richtung auf das Filter 3 abgewinkelt ist. Auf dem nach oben ragenden Randende 64 liegt das Filter auf. Der obere Rand 6 ist in entgegengesetzter Richtung zum Rand 63 nach außen abgewinkelt und hat größere Dicke als die Wand 62 des Filterhalters 4. Mit dem abgewinkelten Rand 6 liegt der Filterhalter 4 auf der Schulter 7 des Halters 8 in montierter Lage der Filterelemente auf.

Von der Wand 62 steht mit geringem Abstand unterhalb ihres oberen Randes 6 ein in Richtung auf das Filter 3 ragender Horizontalsteg 65 ab, der parallel zu einem horizontalen Schenkel 66 des unteren Randes 63 verläuft. Die Breite dieses Steges 65 ist gleich der Breite des Schenkels 66. Parallel zur Wand 62 verläuft eine vertikale Trägerwand 67, die senkrecht an den Steg 65 anschließt und ihn nach unten und oben überragt. Nach unten ragt die Trägerwand 67 nur relativ wenig vor, während sie über den Steg 65 nach oben bis über die Höhe des Bodens 30 der Schiene 1 ragt. Die Trägerwand 67 liegt mit geringem Abstand im Bereich neben der Schiene 1. Geringfügig im Bereich unterhalb des Bodens 30 steht von der Trägerwand ein weiterer Horizontalsteg 68 ab, der geringfügig dicker ist als der Steg 65. In montierter Lage liegt das Filter 3 an der unteren Stirnseite 69 der Trägerwand 67 an. Sie begrenzt mit dem Steg 65 und dem oberhalb dieses Steges liegenden Wandabschnitt der Wand 62 eine Fluidrinne 70, in der ein Dichtmedium untergebracht ist. Eine entsprechende Fluidrinne 71 weist der andere Filterträger 4' auf. In beide Fluidrinnen 70, 71 ragen die nach unten über den Boden 30 vorstehenden seitlichen Wandabschnitte 54, 55 der Schiene 1. Über diese Fluidrinnen 70 und 71 ist eine einwandfreie Abdichtung der Filterelemente gegenüber der Tragkonstruktion, insbesondere ihrer Schiene 1, gewährleistet.

Die Halter 8, 8' sind im wesentlichen spiegelsymmetrisch ausgebildet. Sie unterscheiden sich lediglich dadurch, daß das freie Ende 72 der Schulter 7 des Halters 8 rechtwinklig nach oben und das freie Ende 73 der Schulter 7' des Halters 8' rechtwinklig nach unten abgebogen sind. Nachfolgend wird daher lediglich der Halter 8 beschrieben. Er hat einen in montierter Lage vertikalen Schenkel 74, dessen oberes Ende 75 nach oben geringfügig in der Dicke zunimmt und dann in die L-förmig abgewinkelte Schulter 7 übergeht. Das untere Ende 76 des Halters 8 ist als Klemmaufnahme mit zwei Klemmschenkeln 77 und 78 ausgebildet, die geringfügig geringere Dicke haben als der Schenkel 74 und an der Wurzel der Klemmaufnahme teilkreisförmig abgerundet ineinander übergehen. Der Klemmschenkel 78 verläuft nach unten in Richtung auf den anderen Schenkel 77 geneigt und weist ein stumpfwinklig nach außen abgebogenes Ende 79 auf. Entsprechend ist das untere Ende 80 des Halters 8' ausgebildet. Mit der Schulter 7 ragt der Halter 8 durch den Schlitz 60 der Aufnahme 56 und liegt auf dem unteren Wandabschnitt der Seitenwand 58 auf. Das nach oben ragende freie Ende 72 der Schulter 7 hintergreift den oberen Wandabschnitt 81 der Seitenwand 58.

Beim anderen Halter 8' ragt die horizontale Schulter 7' durch den Schlitz 61 der Aufnahme 57 und liegt wiederum auf dem unteren Wandabschnitt der Seitenwand 59 auf. Das nach unten abgebogene freie Ende 73 der Schulter 7' hintergreift den unteren Wandabschnitt der Seitenwand 59. Dadurch sind beide Halter 8 und 8' einwandfrei an der Schiene bzw. in deren Aufnahmen 56 und 57 gesichert. Längs der Aufnahmen 56, 57 können die Halter 8, 8' einfach in die gewünschte Einbaulage verschoben werden. Die freien Enden 72, 73 der Schultern 7, 7' sind so lang, daß sie nicht quer zur Längsrichtung der Aufnahmen 56, 57 aus den Schlitzen 60, 61 herausgezogen werden können.

Der durch die einander gegenüberliegenden Filterträger 4, 4' gebildete Hohlraum wird nach unten durch eine Abdeckung 82 geschlossen. Sie besteht im wesentlichen aus einer Bodenplatte 83, über die nach oben zwei mit Abstand voneinander liegende Haltestege 84 und 85 ragen, deren freie Enden 86 und 87 wulstartig verdickt ausgebildet sind. In montierter Lage stützt sich die Abdeckung 82 mit den seitlich über die Stege 84, 85 ragenden Bodenrändern 88, 89 an den L-förmigen Schenkeln 63 und 90 der Träger 4, 4' ab. Die verdickten Enden 86 und 87 der Stege 84, 85 liegen in den als Klemmaufnahmen ausgebildeten Enden 76, 80 der Halter 8, 8'. Die Innenseite 91 der Bodenplatte 83 ist quer zu ihrer Längsrichtung zahnartig profiliert. Die Abdeckung 82 besteht vorzugsweise aus Kunststoff. Die Schenkel 77, 78 bzw. 92, 93 der Klemmaufnahmen 76, 80 der Halter 8, 8' sind federelastisch ausgebildet und liegen unter Vorspannung an den verdickten Enden 86, 87 der Stege 84, 85 an. Die den Filterelementen 3, 3' zugewandten Schenkel 77, 93 der Klemmaufnahmen 76, 80 haben eine ebene Innenseite, an der die Stege 84, 85 flächig anliegen. Infolge der abgewinkelten freien Enden 79 bzw. 94 der Schenkel 78, 92 der Klemmaufnahmen 76, 80 lassen sich die Stege 84, 85 einfach in die Aufnahmen stecken, zumal die verdickten Enden 86, 87 der Stege teilkreisförmigen Querschnitt haben.

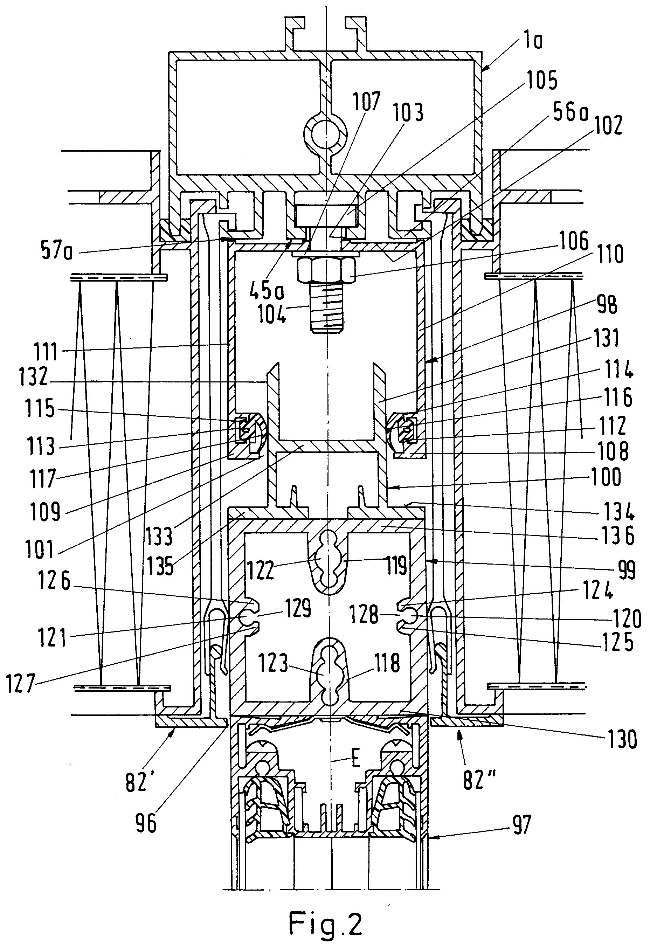

Die Ausführungsform nach Fig. 2 unterscheidet sich von der zuvor beschriebenen Ausführungsform im wesentlichen dadurch, daß die Abdeckung durch zwei Teile 82', 82'' gebildet wird, zwischen denen eine Durchstecköffnung 96 für eine nach unten über die Filter-Einheit ragende Wand 97 vorgesehen ist. Sie ist über eine mehrteilige Halterung 98, 99 an der Schiene 1a befestigt. Die Halterung besteht aus einem im Querschnitt etwa U-förmigen, sich in Längsrichtung erstreckenden Profilteil 98 und einem unteren, im Querschnitt im wesentlichen quadratischen Profilteil 99, das mit einem Ansatz 100 in einen Schlitz 101 des oberen Profilteiles 98 ragt. Das Profilteil 98 liegt mit seinem Boden 102 an den Aufnahmen 56a und 57a der Schiene 1a an und weist mindestens eine, vorzugsweise mehrere, in Längsrichtung mit Abstand hintereinander liegende bodenseitige und mittig angeordnete Öffnungen 103 auf, durch die ein Sicherungs- und Halterungsteil 104 ragt. Das Sicherungsteil 104 ist vorzugsweise eine Schraube, deren Kopf 105 in der mittigen Aufnahme 45a der Schiene 1a liegt. Die Schraube 104 wird mit einer Mutter 106 unter Zwischenlage einer Unterlegscheibe 107 am Profilteilboden 102 abgestützt. Im Bereich ihrer freien Enden 108 und 109 sind die Schenkel 110 und 111 des Profilteiles 98 verbreitert und mit einer Aufnahme 112 und 113 versehen, in denen jeweils eine Dichtung 114 und 115 angeordnet ist. Die Dichtungen weisen jeweils einen Federschenkel 116, 117 auf, die sich bei montierter Wand 97 bzw. montiertem Profilteil 99 an dessen Ansatz 100 unter elastischer Vorspannung dichtend abstützen.

Das Profilteil 99 ist als Rohrteil mit etwa quadratischem Umriß ausgebildet, das in den Rohrquerschnitt ragende Aufnahmen 118, 119 und 120, 121 für Halteteile oder dergleichen aufweist. Die einander in Höhenrichtung gegenüberliegenden Aufnahmen 118 und 119 sind im Querschnitt laschenartig mit etwa schlüssellochförmigen Öffnungen 122, 123 versehen. Beide Aufnahmen 118 und 119 sind gleich ausgebildet. Die einander gegenüberliegenden seitlichen Aufnahmen 120 und 121 sind ebenfalls gleich ausgebildet und liegen spiegelsymmetrisch zur Vertikalebene E der Wand 97. Sie weisen teilkreisförmig abgerundete Klemmschenkel 124, 125 und 126, 127 auf, die Einführschlitze 128, 129 begrenzen. In diesen Aufnahmen können Verbindungsstangen oder dergleichen gehalten werden. Die Wand 97 ist an einer unteren Wand 130 des Profilteiles 99 befestigt.

Auf dem Profilteil 99 ist der Ansatz 100, der vorzugsweise als gesondertes Profilteil ausgebildet ist, vorzugsweise verschraubt. Der Ansatz 100 ist im Querschnitt etwa H-förmig ausgebildet und hat Schenkel 131, 132, die in montierter Lage parallel zur Vertikalebene E verlaufen und über einen Quersteg 133 miteinander verbunden sind. Die Schenkel 131, 132 stehen senkrecht von plattenförmigen Fußstücken 134, 135 ab, die auf einer oberen Wand 136 des Profilteiles 99 flächig aufliegen und mit dieser verschraubt sind. Die Fußstücke 134, 135 ragen quer zur Vertikalebene E über beide Seiten der Schenkel 131, 132.

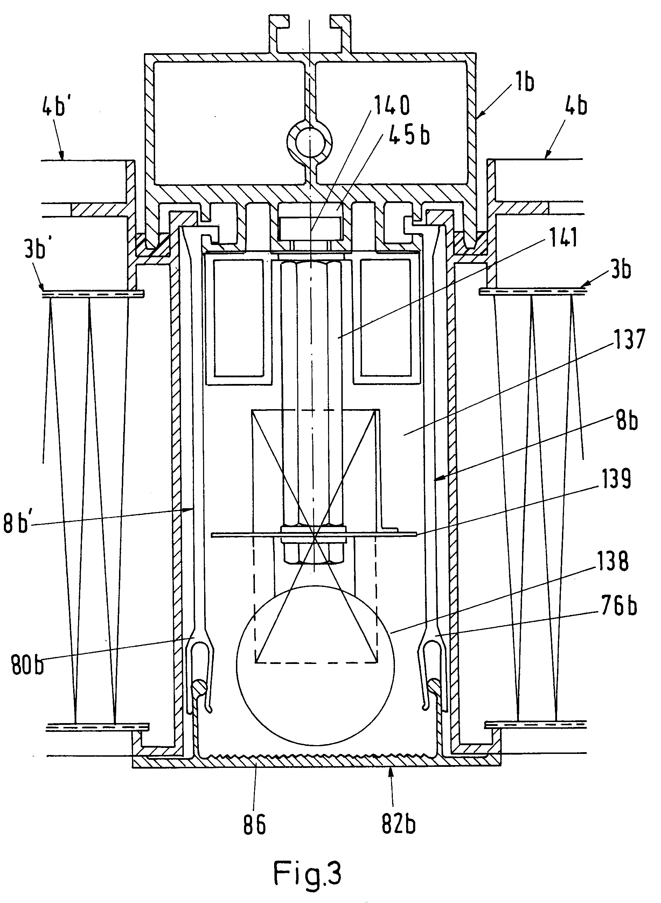

Bei der Ausführungsform nach Fig. 3 ist die Schiene 1b wiederum gleich ausgebildet wie die Schiene 1a. Außerdem sind die Filter 3b und 3b', die Filterträger 4b, 4b' und die Halter 8b, 8b' gleich ausgebildet wie die entsprechenden Teile gemäß den Fig. 1 und 2. Auch die Abdeckung 82b ist gleich ausgebildet wie die Abdeckung 82 gemäß Fig. 1. In dem im Bereich zwischen den Haltern 8b und 8b' gebildeten Kanal 137 ist eine Leuchte 138 angeordnet. Sie liegt etwa in Höhe der Aufnahmen 76b und 80b und erstreckt sich bis nahe an die Abdeckung 82b. Die Leuchte 138 ist an der Schiene 1b vorzugsweise verschraubt. Hierzu ist die Leuchte an einem Träger 139 befestigt, vorzugsweise verschraubt. In der mittleren Aufnahme 45b der Schiene 1b liegt ein Kopf 140 eines Halters 141, der aus der Aufnahme 45b nach unten in den Kanal 137 ragt und an dem der Träger 139 befestigt ist.

Da sich die Leuchte 138 innerhalb des Querschnittes der Schiene 1b und im Bereich der Dicke der Filter 3b, 3b' befindet, wird das Rastermaß der Rasterdecke nicht beeinträchtigt und die Raumhöhe des Reinraumes nicht verringert.

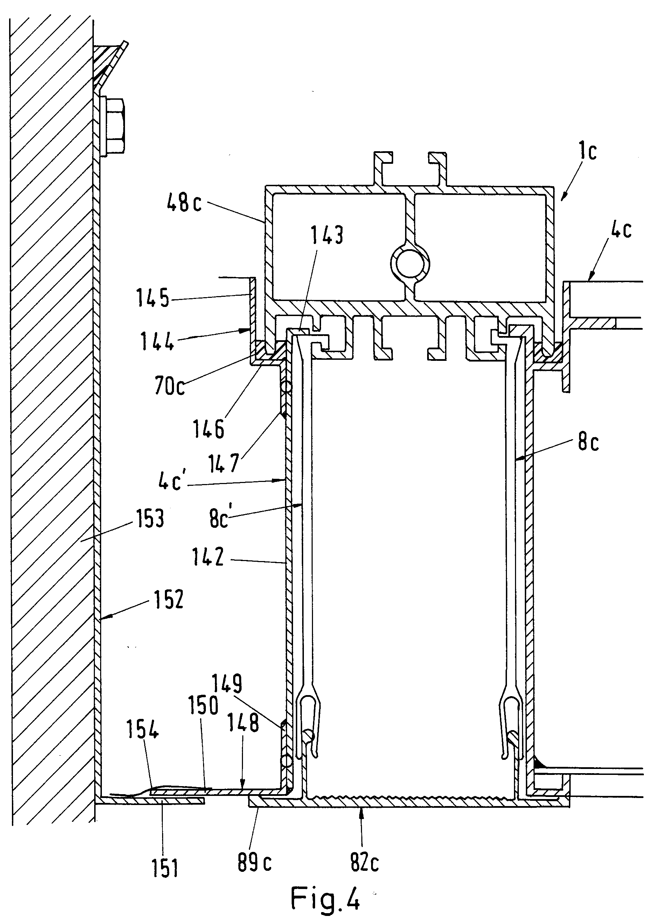

Bei der Ausführungsform nach Fig. 4 sind die Schiene 1c und die Halter 8c und 8c' gleich ausgebildet wie die Schiene 1 und die Halter 8, 8' gemäß Fig. 1. Anstelle des Filters 3 mit dem Filterträger 4 ist ein Blindfilter vorgesehen, der lediglich aus dem Filterträger 4c besteht. Er ist gleich ausgebildet wie der Filterträger 4 gemäß Fig. 1. Anstelle des Filters 3' und des Filterträgers 4' (Fig. 1) ist ein Blindblech 4c' vorgesehen. Es weist eine vertikale Wand 142 mit einem oberen, in Richtung auf den Filterträger 4c rechtwinklig abgebogenen Rand 143 auf, der vorzugsweise gleiche Dicke wie die Wand 142 hat. Im Bereich unterhalb der Fluidrinne 70c ist an der Wand 142 ein im Querschnitt Z-förmiger Profilteil 144 befestigt, vorzugsweise angeschweißt. Er hat einen längeren, mit geringem Abstand neben der Seitenwand 48c der Schiene 1c verlaufenden Schenkel 145, der über einen Quersteg 146 mit einem kürzeren Schenkel 147 verbunden ist. Die beiden zueinander parallelen Schenkel 145, 147 liegen in der Einbaulage vertikal. Der Schenkel 147 liegt an der vom Halter 8c abgewandten Seite an der Wand 142 an. Der horizontale Quersteg 146 bildet den Boden der Fluidrinne 70c.

Am unteren Rand der Wand 142 ist ein im Querschnitt L-förmiges Schienenteil 148 mit einem kürzeren vertikalen Schenkel 149 befestigt, vorzugsweise angeschweißt. Der längere Schenkel 150 liegt auf dem benachbarten überstehenden Rand 89c des Abdeckteiles 82c auf. Der Schenkel 150 erstreckt sich bis über einen horizontalen Schenkel 151 eines im Querschnitt L-förmigen Anschlußteiles 152, das an einer vertikalen Wand 153 vorzugsweise verschraubt ist. Zur Abdichtung gegenüber dem Schenkel 151 ist auf dem Schenkel 150 ein Dichtband 154 befestigt.

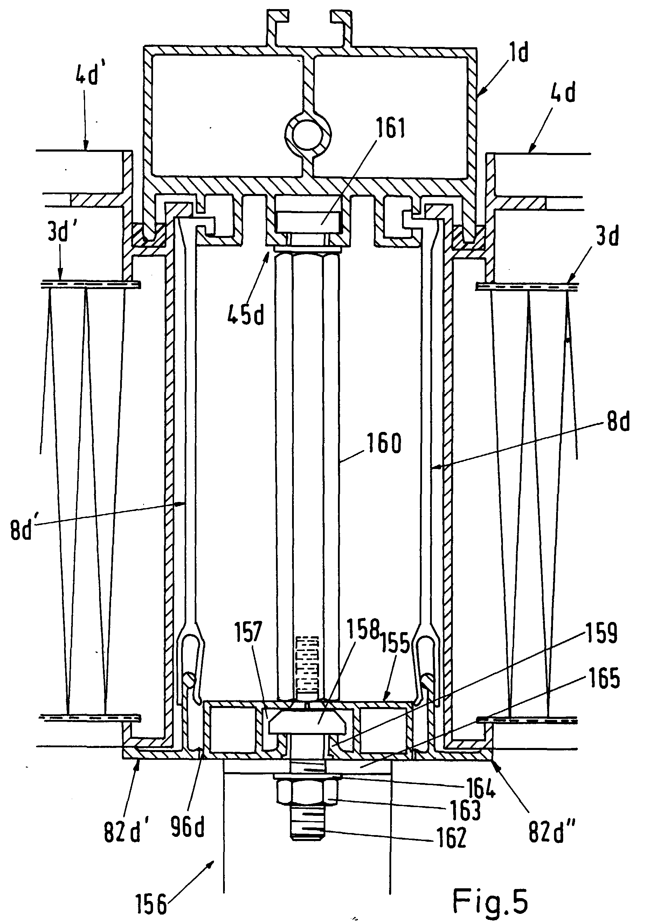

Bei der Ausführungsform nach Fig. 5 entsprechen die Schiene 1d, die Filtereinheiten 3d, 4d, 3d', 4d', die Halter 8d, 8d' und die Abdeckteile 82d', 82d'' den entsprechenden Teilen gemäß Fig. 2. Lediglich in der Öffnung 96d zwischen den Abdeckteilen 82d', 82d'' ist anstelle der Vertikalwand 97 ein als Träger dienendes Profilteil 155 befestigt, an dessen Unterseite eine Anhängelast 156, wie zum Beispiel ein Transportsystem, befestigt ist. Der Träger 155 hat eine mittige Aufnahmekammer 157 für einen Kopf 158, der sich auf einer innerhalb der Aufnahme liegenden Ringwand 159 abstützt. Der Kopf 158 ist Teil eines Gewindebolzens 160, der nach oben über das Profilteil 155 ragt und mit seinem Bolzenkopf 161 in der mittleren Aufnahme 45d der Schiene 1d liegt. Der Gewindebolzen 160 liegt mittig zwischen den Haltern 8d, 8d' und ragt mit einem Gewindeteil 162 nach unten aus dem Profilteil 155. Auf das Gewindeende 162 ist eine Mutter 163 geschraubt, die über eine Unterlegscheibe 164 an einem Boden 165 der Anhängelast 156 anliegt. Mit der Mutter 163 wird die Anhängelast 156 gegen das Profilteil 155 und der Gewindebolzen 160 gegen die Schiene 1d verspannt. Das Profilteil 155 liegt mit seiner Unterseite bündig mit der Unterseite der Abdeckteile 82d', 82d'' und ist innerhalb der Querschnittsbreite der Schiene 1d untergebracht.

Die Ausführungsform nach Fig. 12 entspricht im wesentlichen dem Ausführungsbeispiel nach Fig. 3. Die Halter 8e, 8e' sind nach unten verlängert, so daß die Klemmaufnahmen 76e, 80e im Bereich unterhalb der Filterträger 4e, 4e' liegen. Der Halter 141e, an dem der Träger 139e befestigt ist, ist entsprechend verlängert, so daß die Leuchte 138e mit geringem Abstand zur Abdeckung 82e liegt. Die Leuchte 138e liegt ebenfalls nahezu vollständig im Bereich unterhalb der Filterträger 4e, 4e'. Die Halter 76e, 80e weisen auf ihren voneinander abgewandten Seiten jeweils einen nach außen ragenden Steg 166, 167 auf. Die Stege liegen parallel zum horizontalen Schenkel 66e, 90e am unteren Rand der Filterträger 4e, 4e'. Die Stege sind mit Abstand unterhalb der Schenkel 66e, 90e angeordnet. An der Unterseite der Stege 166, 167 ist jeweils ein Lochblech 160, 169 befestigt. Die Lochbleche erstrecken sich vom Steg 166, 167 aus vertikal nach unten und sind dann horizontal abgewinkelt. Am Übergang vom vertikalen in den horizontalen Teil der Lochbleche 168, 169 liegt die Abdeckung 82e mit ihren Rändern 88e, 89e an. Die Abdeckung 82e ist mit Luftdurchtrittsöffnungen 170 versehen.

Die durch die Filter 3e, 3e' nach unten strömende Reinluft trifft auf die Lochbleche 168, 169, durch welche sie nach unten in den Reinraum austreten kann. Die Lochbleche 168, 169 führen zu einem geringem Luftstau, so daß die Reinluft auch in Richtung auf die Abdeckung 82e strömt und durch deren Öffnungen 170 ebenfalls nach unten in den Reinraum austreten kann. Auf diese Weise erfolgt der Durchtritt der Reinluft auch im Bereich der Abdeckungen 82e, also über die gesamte Rasterdecke. Zusätzlich kann die Leuchte 138e durch die in Richtung auf die Abdeckung 82e strömende Luft zumindest teilweise gekühlt werden. Im übrigen ist diese Ausführungsform gleich ausgebildet wie das Ausführungsbeispiel nach Fig. 3.

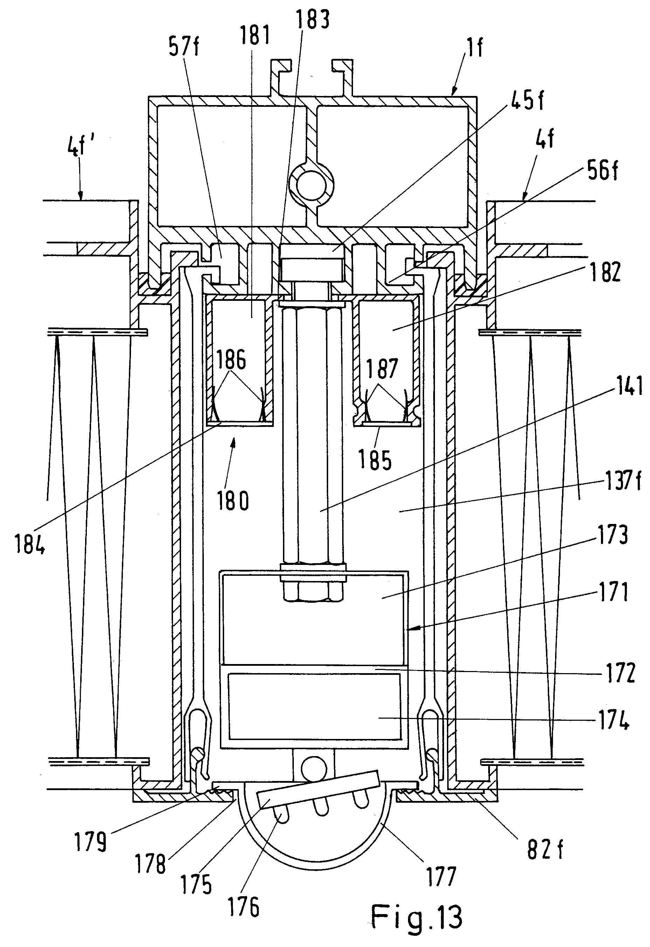

Fig. 13 zeigt eine Ausführungsform, bei der im Kanal 137f zwischen den beiden Filterträgern 4f, 4f' ein Profilteil 171 untergebracht ist. Es hat rechteckigen Querschnitt und ist durch eine horizontale Wand 172 in zwei Kammern 173 und 174 unterteilt. Das Profilteil 171 ist, wie dies anhand von Fig. 3 für die Leuchte 138 beschrieben ist, mit dem Halter 141 im Kanal 137f befestigt. Im Profilteil 171 kann eine (nicht dargestellte) Sende-Empfangs-Elektronik untergebracht werden.

An der Unterseite des Profilteils 171 ist ein Träger 175 vorteilhaft schwenkbar gelagert, der wenigstens eine Empfangs/Sende-Diode 176 aufweist. Der Träger 175 liegt unterhalb einer für die Sendesignale durchlässigen Abdeckung 177. Sie ist vorteilhaft halbkugelförmig ausgebildet und ragt durch eine Öffnung 178 in der Abdeckung 82f. Die Abdeckung 177 hat einen umlaufenden Flansch 179, mit dem die Abdeckung 177 an der Rückseite der Abdeckung 82f gehalten ist. Die Dioden 176 sind vorteilhaft IR-Dioden, die mit der im Profilteil 171 untergebrachten Sende-Empfangs-Elektronik verbunden sind. Mittels der Sende-Empfänger-Einheit können im Reinraum befindliche Geräte, Vorrichtungen und dergleichen ferngesteuert und/oder mit Daten versorgt werden. Es ist auch möglich, von den Geräten, Vorrichtungen und dergleichen entsprechende Signale an die Sende-Empfangs-Einheit zu senden.

An der Unterseite der Aufnahmen 45f, 56f, 57f der Schiene 1f ist mittels des Halters 141 innerhalb des Kanals 137f ein Hohlprofilteil 180 befestigt. Es liegt an der Schiene 1f an und hat zwei mit Abstand voneinander liegende Kammern 181, 182, die beiderseits des Halters 141 liegen und jeweils rechteckigen Querschnitt haben. Zwischen den beiden Kammern 181, 182 verläuft ein Steg 183, der vom Halter 141 durchsetzt ist und ebenfalls an der Unterseite der Schiene 1f anliegt. Die beiden Kammern 181, 182 sind gleich ausgebildet und können Daten- und/oder Versorgungskabel aufnehmen. Die Sende-Empfänger-Einheit kann über in den Kammern 181, 182 verlegte Kabel beispielsweise an einen Rechner, eine Steuerung und dergleichen angeschlossen sein.

Die Kammern 181, 182 sind nach unten offen und werden durch jeweils einen Verschlußteil 184, 185 geschlossen. Sie haben mit Abstand voneinander abstehende Klemmfedern 186, 187, die in die Kammern 181, 182 ragen und mit denen die Verschlußteile 184, 185 klemmend gehalten werden. Zur Erzeugung der erforderlichen Klemmspannung sind die Seitenwandungen der Kammern 181, 182 nahe dem unteren Ende vorteilhaft verdickt ausgebildet bzw. mit einer nach innen ragenden Profilierung versehen, so daß die Klemmfedern 186, 187 beim Einstecken elastisch nach innen gebogen werden.

Im übrigen ist das Ausführungsbeispiel nach Fig. 13 gleich ausgebildet wie die Ausführungsform nach Fig. 3, bei der das Profilteil 180 ebenfalls vorgesehen ist. Das Profilteil 180 kann auch bei den Ausführungsbeispielen nach den Fig. 1, 4, 5 und 12 vorgesehen sein.

Bei den beschriebenen Ausführungsbeispielen ist die Fluidrinne 70, 71, 70c Bestandteil der Filterträger 4 bzw. 4', 4c', so daß die Fluidrinnen in der Einbaulage der Filter-Einheiten innerhalb des Umrisses ihres Trägerrahmens liegen. Dadurch muß der durch die Schienen und die Kupplungsstücke gebildete Trägerrahmen für die Fluidrinne nicht verbreitert werden, so daß die wirksame Filterfläche nicht verkleinert wird. Vielmehr kann die wirksame Filterfläche sogar noch vergrößert werden. Vorteilhaft ist ferner, daß trotz einer Vergrößerung der Filterfläche die Unterseite der Einbaudecke eben ausgebildet sein kann. Schließlich haben die beschriebenen Ausführungsbeispiele auch den Vorteil, daß Anbauteile, wie eine Beleuchtung, Anhängelasten, eine Wandfixierung oder dergleichen, zwischen den Filtern 3, 3' liegen können, also nicht innerhalb eines Hohlraumes des Rahmenprofiles liegen müssen.

## Patentansprüche

1. Reinraumdecke, vorzugsweise Rasterdecke, mit in einer Deckentragvorrichtung angeordneten Filter-Einheiten, die Filterelemente mit Tragrahmen aufweisen, die an Haltern der Deckentragvorrichtung abgestützt und über mindestens eine Fluidrinne gegenüber der Deckentragvorrichtung abgedichtet sind,
dadurch gekennzeichnet, daß die Fluidrinne (70, 71; 70c) filterelementseitig vorgesehen ist.

2. Reinraumdecke nach Anspruch 1,
dadurch gekennzeichnet, daß die Deckentragvorrichtung (1; 1a bis 1f; 2, 2a) mit mindestens einem Steg (54, 55) in die Fluidrinne (70, 71; 70c) ragt, die vorzugsweise am Tragrahmen (4, 4'; 4b, 4b'; 4c, 4c'; 4d, 4d'; 4e, 4e'; 4f, 4f') vorgesehen ist.

3. Reinraumdecke nach Anspruch 1 oder 2,
dadurch gekennzeichnet, daß der Tragrahmen (4, 4') mit einem vom Filter (3, 3') weg gerichteten Steg (6, 6') an der Deckentragvorrichtung (1, 2) abgestützt ist, und daß vorteilhaft die Fluidrinne (70, 71; 70c) auf der vom Steg (6, 6') abgewandten Seite des Tragrahmens (4, 4') liegt.

4. Reinraumdecke nach einem der Ansprüche 1 bis 3,
dadurch gekennzeichnet, daß der Halter (8, 8'; 8b, 8b'; 8c, 8c'; 8d, 8d'; 8e, 8e') in Aufnahmen (56, 57; 56a, 57a) an der Unterseite von Schienen (1; 1a bis 1f) der Deckentragvorrichtung (1; 1a bis 1f; 2, 2a) befestigt ist, und daß vorzugsweise die Schiene (1) an ihrer Unterseite benachbart zu den in die Fluidrinnen (70, 71) ragenden Stegen (54, 55) seitliche Aufnahmen (56, 57) aufweist.

5. Reinraumdecke nach einem der Ansprüche 1 bis 4,
dadurch gekennzeichnet, daß die Halter (8, 8') in die seitlichen Aufnahmen (56, 57) der Schiene (1) eingehängt sind, die vorteilhaft mindestens eine den Stegen (54, 55) der Schiene (1) zugewandte Öffnung (60, 61) zur Durchführung von Stegen (7, 7') der Halter (8, 8') aufweisen.

6. Reinraumdecke nach einem der Ansprüche 1 bis 5,
dadurch gekennzeichnet, daß die Schiene (1) zwischen den seitlichen Aufnahmen (56, 57) eine weitere, vorzugsweise mittig angeordnete Aufnahme (45) mit einem nach unten offenen Durchführschlitz (53) aufweist.

7. Reinraumdecke nach einem der Ansprüche 1 bis 6,
dadurch gekennzeichnet, daß die Aufnahmen (45; 56, 57) und die Stege (54, 55) der Schiene (1) am Boden (30) eines im Querschnitt vorzugsweise rechteckigen Hohlprofilkörpers (28) der Schiene (1) vorgesehen sind, und daß vorzugsweise an der dem Boden (30) gegenüberliegenden Decke (35) des Hohlprofilkörpers (28) eine vorzugsweise spiegelsymmetrisch zu dessen Längsmittelebene (46) angeordnete Aufnahme (36) vorgesehen ist.

8. Reinraumdecke nach einem der Ansprüche 1 bis 7,
dadurch gekennzeichnet, daß der Tragrahmen (4, 4') eine Einstecköffnung (5) für die Filter (3, 3') aufweist, und daß vorzugsweise der Tragrahmen (4, 4') mit dem von den Filtern (3, 3') weg gerichteten Schenkel (6) auf den Haltern (8, 8') aufliegt.

9. Reinraumdecke nach einem der Ansprüche 1 bis 8,
dadurch gekennzeichnet, daß der Halter (8, 8') mit einem in der Aufnahme (56, 57) abgestützten Steg (7, 7') einen Wandabschnitt (81, 59) der Aufnahme (56, 57) hintergreift.

10. Reinraumdecke nach einem der Ansprüche 1 bis 9,
dadurch gekennzeichnet, daß das andere Halterende (76, 80) als Klemmaufnahme mit Federschenkeln (77, 78; 92, 93) ausgebildet ist.

11. Reinraumdecke nach einem der Ansprüche 1 bis 10,
dadurch gekennzeichnet, daß zwischen den einander gegenüberliegenden Tragrahmen (4, 4') mindestens ein vorzugsweise plattenartiges Abdeckteil (82) vorgesehen ist, das vorzugsweise mit Haltestegen (84, 85) mit vorzugsweise verdickten Stegenden (86, 87) in der Klemmaufnahme (76, 80) der Halter (8, 8') gehalten ist.

12. Reinraumdecke nach Anspruch 11,
dadurch gekennzeichnet, daß zwei Abdeckungen (82', 82'') an einander gegenüberliegenden Seiten an ein Wandteil (97) anschließen, das vorteilhaft mit Halteteilen (98, 99), vorzugsweise mit miteinander verbundenen und übereinander angeordneten Hohlprofilteilen, an der Schiene (1a) gehalten ist.

13. Reinraumdecke nach Anspruch 12,
dadurch gekennzeichnet, daß mindestens ein Halteteil (98) unmittelbar an der Schiene (1a) befestigt, vorzugsweise verschraubt, ist, und daß vorteilhaft das andere Halteteil (99) mit einem Steckansatz (100) am Halteteil (98) befestigt ist.

14. Reinraumdecke nach einem der Ansprüche 1 bis 13,
dadurch gekennzeichnet, daß in dem von einander benachbarten Haltern (8b, 8b') gebildeten und durch die Abdeckung (82b) nach unten abgedeckten Raum (137) mindestens eine Leuchte (138) angeordnet ist, die vorzugsweise an der Schiene (1b) gehalten ist.

15. Reinraumdecke nach einem der Ansprüche 1 bis 14,
dadurch gekennzeichnet, daß der eine Tragrahmen (4c') als Blindblech ausgebildet ist, und daß vorteilhaft der Fluidrinnenboden (146) des Tragrahmens (4c') durch ein vorzugsweise Z-förmiges Profilteil (144) begrenzt ist, das an einer Wand (142) des Tragrahmens (4c') befestigt, vorzugsweise verschweißt, ist.

16. Reinraumdecke nach Anspruch 15,
dadurch gekennzeichnet, daß an der Wand (142) des Tragrahmens (4c') ein weiteres schienenartiges Profilteil (148) befestigt, vorzugsweise verschweißt, ist, an dem das Abdeckteil (82c) mit einem Rand (89c) anliegt.

17. Reinraumdecke nach einem der Ansprüche 1 bis 16,
dadurch gekennzeichnet, daß zwei Abdeckteile (82d', 82d'') an einander gegenüberliegenden Seiten an ein Tragteil (155) für eine Anhängelast (156) anschließen, die vorzugsweise am Tragteil (155) verschraubt ist, das vorteilhaft an der Schiene (1d) befestigt ist.

18. Reinraumdecke nach einem der Ansprüche 1 bis 17,
dadurch gekennzeichnet, daß die Fluidrinne (70, 71) innerhalb der Querschnittsbreite des Tragrahmenprofilteiles (4, 4') liegt.

19. Reinraumdecke nach einem der Ansprüche 11 bis 18,
dadurch gekennzeichnet, daß das Abdeckteil (82e) im Bereich unterhalb der Tragrahmen (4e, 4e') angeordnet und vorzugsweise mit Luftdurchtrittsöffnungen (170) versehen ist.

20. Reinraumdecke nach Anspruch 19,
dadurch gekennzeichnet, daß das Abdeckteil (82e) an den verlängerten Haltern (8e, 8e') befestigt ist, und daß vorzugsweise das Abdeckteil (82e) an Lochbleche (168, 169) anschließt, die mit Abstand unterhalb der Filter (3e, 3e') angeordnet sind.

21. Reinraumdecke nach einem der Ansprüche 1 bis 20,
dadurch gekennzeichnet, daß im Bereich zwischen den Tragrahmen (4f, 4f') mindestens eine Sende-Empfangs-Einheit untergebracht ist, die vorteilhaft wenigstens eine, vorzugsweise als IR-Diode ausgebildete, Sende/Empfangs-Diode (176) und/oder eine Datenfunk-Übertragungseinheit aufweist.

22. Reinraumdecke nach Anspruch 21,
dadurch gekennzeichnet, daß die Diode (176) unter einer für Signale durchlässigen Abdeckung (177) liegt, die vorteilahft am Abdeckteil (82f) gehalten ist.

23. Reinraumdecke nach einem der Ansprüche 1 bis 22,
dadurch gekennzeichnet, daß im Bereich zwischen den Tragrahmen (4f, 4f') wenigstens ein, vorzugsweise zwei Profilteile (171, 180) untergebracht sind, und daß vorzugsweise das eine Profilteil (171) eine Sende-Empfangs-Elektronik und das andere Profilteil (180) Daten- und/oder Versorgungskabel aufnimmt.
